# EUROPÄISCHE PATENTSCHRIFT

(11) **EP 3 132 859 B1**
(45) Veröffentlichungstag und Bekanntmachung des Hinweises auf die Patenterteilung: **17.10.2018**
(21) Anmeldenummer: 16182984.1
(22) Anmeldetag: 05.08.2016
(51) Int. Cl.: G05D 1/02, B66F 9/06

(54) **FÖRDEREINRICHTUNG MIT KOLLISIONSDETEKTION**
CONVEYING DEVICE WITH COLLISION DETECTION
DISPOSITIF DE TRANSPORT DISPOSANT D'UNE DETECTION DE COLLISION

(30) Priorität: 17.08.2015 DE 102015010718
(43) Veröffentlichungstag der Anmeldung: 22.02.2017
(73) Patentinhaber: Eisenmann SE, 71032 Böblingen (DE)
(72) Erfinder: Weiland, Ralf, 72135 Dettenhausen (DE); Kovacs, Josef, 71093 Weil im Schönbuch (DE)
(74) Vertreter: Ostertag & Partner Patentanwälte mbB

(56) Entgegenhaltungen:
- EP-A2- 0 991 045
- DE-A1- 19 910 715
- DE-A1-102007 046 868
- US-A- 4 345 662
- US-A- 5 314 037

## Beschreibung

### HINTERGRUND DER ERFINDUNG

### 1. Gebiet der Erfindung

Die Erfindung betrifft eine Fördereinrichtung zum Fördern von beladenen oder unbeladenen Ladungsträgern. Die Fördereinrichtung weist eine erste Fördereinheit und eine zweite Fördereinheit auf. Jede Fördereinheit weist eine Längsachse auf und ist auf Bodenrollen verfahrbar. Zumindest eine der Bodenrollen einer Fördereinheit ist mittels eines Antriebssystems antreibbar. Die erste Fördereinheit und die zweite Fördereinheit sind relativ zueinander und voneinander unabhängig entlang einer jeweiligen Fahrrichtung zumindest in Richtung der Längsachse bewegbar.

### 2. Beschreibung des Standes der Technik

Die erste und die zweite Fördereinheit können sich alleine und zusammen autonom beispielsweise innerhalb einer Lager- oder Produktionshalle bewegen. Eine derartige Fördereinrichtung an sich ist beispielsweise aus der DE 10 2007 046 868 A1 bekannt. In dem genannten Dokument bilden jeweils zwei Fördereinheiten nach Art einer Förderkufe eine Fördereinrichtung. Die beiden Förderkufen sind für das Fördern von Ladungsträgern in Form von Paletten, insbesondere von sogenannten Euro-Paletten, konzipiert. Hierzu können die beiden Förderkufen als Förderkufenpaar eine Palette unterfahren, diese dann anheben, in angehobenen Zustand an einen Ort fördern und dort wieder absetzen.

Für die Orientierung der Fördereinheiten können verschiedene Leitsysteme vorgesehen sein. So ist es beispielsweise möglich, sich an Markierungen zu orientieren, die an dem Boden angebracht sind, der von den Fördereinheiten befahren wird. Eine zusätzliche Möglichkeit zur Orientierung und insbesondere zur Kollisionswarnung könnten Detektionseinrichtungen bilden, die beispielsweise auf Laserlicht basieren. Hier besteht allerdings die Problematik, dass derartige Systeme einen vergleichsweise hohen Platzbedarf haben und folglich nur schwer in eine Fördereinheit zu integrieren sind, die in ihren äußeren Abmessungen so klein gehalten werden soll, dass sie beispielsweise unter eine Euro-Palette gefahren werden kann. Zum anderen ist durch die angestrebte hoch integrierte Bauweise eine Anbringung eines solchen Kollisionswarnsystems lediglich in Bodennähe möglich, was eine besonders hohe Robustheit des Warnsystems erfordert. Beiden Ansprüchen - gute Integrierbarkeit und hohe Robustheit - können auf Laserlicht basierende Systeme nicht erfüllen. Schließlich sollen die zusätzlichen Kosten für derartige Detektionseinrichtungen die der Fördereinrichtung nicht mehr als nötig erhöhen.

Die US 4,345,662 beschreibt eine Installation sich automatisch bewegender Fahrzeuge für das Fördern einer Last.

### ZUSAMMENFASSUNG DER ERFINDUNG

Es ist demnach eine Aufgabe der vorliegenden Erfindung, eine Fördereinrichtung der eingangs genannten Art anzugeben, die mit einer Detektionseinrichtung versehen ist, welche die erwähnten Nachteile vermeidet und insbesondere gut integrierbar, robust und kostengünstig ist.

Die Aufgabe wird durch eine Fördereinrichtung mit den Merkmalen des unabhängigen Anspruchs gelöst. Weitere Ausgestaltungen der Erfindung sind in den abhängigen Ansprüchen angegeben.

Die erfindungsgemäße Fördereinrichtung zum Fördern von beladenen oder unbeladenen Ladungsträgern weist eine erste Fördereinheit und eine zweite Fördereinheit auf. Jede Fördereinheit weist eine Längsachse auf und ist auf Bodenrollen verfahrbar. Zumindest eine der Bodenrollen einer Fördereinheit ist mittels eines Antriebssystems antreibbar. Die erste Fördereinheit und die zweite Fördereinheit sind relativ zueinander und voneinander unabhängig entlang einer jeweiligen Fahrrichtung zumindest in Richtung der Längsachse bewegbar.

Erfindungsgemäß ist vorgesehen, dass die erste Fördereinheit und die zweite Fördereinheit jeweils eine radargestützte Detektionseinrichtung aufweisen, die in der direkten räumlichen Umgebung der jeweiligen Fördereinheit einen Raumwinkelbereich entlang einer Detektionsrichtung erfasst und die Längsachse einer Fördereinheit und die Detektionsrichtung einen Winkel ≥ 5° einschließen.

Die radargestützte Detektionseinrichtung ist eine kombinierte Sende-/Empfangseinrichtung. Sie sendet aktiv ein Radarsignal aus und detektiert den Empfang reflektierter Radarwellen. Dabei legen die Aussendung des Radarsignals und der Empfang der reflektierten Radarwellen eine Detektionsrichtung fest. Vorrangig bestimmt die Ausgestaltung der am Empfang beteiligten Komponenten die Detektionsrichtung, aber auch die Ausstrahlung des Radarsignals hat einen Einfluss auf die Detektionsrichtung der Detektionseinrichtung.

Durch den Winkel zwischen der Detektionsrichtung und der Längsachse wird eine Asymmetrie bezüglich der Längsachse der jeweiligen Fördereinheit und damit auch der jeweiligen Fahrrichtung geschaffen. Das Auseinanderfallen von Detektionsrichtung und Fahrrichtung beziehungsweise Längsachse der Fördereinheiten erlaubt eine bessere seitliche Erfassung des Nahbereichs jeder Fördereinheit, da die Detektionseinrichtung dann einen um den gewählten Winkel näher an der Fördereinheit befindlichen Bereich erfasst. Diese Anordnung ist besonders vorteilhaft bei einem Zusammenspiel der beiden Fördereinheiten in der Fördereinrichtung, wie nachfolgend noch eingehend erläutert werden wird.

Bei einer bevorzugten Ausführungsform kann vorgesehen sein, dass der Winkel zwischen der Längsachse und der Detektionsrichtung zwischen 5° und 110° liegt. Besonders bevorzugt liegt der Winkel zwischen der Längsachse und der Detektionsrichtung zwischen 10° und 50° oder zwischen 80° und 100°, besonders bevorzugt zwischen 20 und 40° und insbesondere bei 30° oder 90°. Es gibt insgesamt zwei Winkelbereiche, die für den Winkel zwischen der Längsachse einer Fördereinheit und der Detektionsrichtung vorteilhaft sein können. Zum einen kann ein Winkel im Bereich zwischen 10° und 50°, bevorzugt bei 30° eine verbesserte seitliche Abdeckung des Erfassungsbereichs der Detektionseinrichtung verbessern. Ein zweiter Winkelbereich zwischen 80° und 100°, bevorzugt bei 90°, kann bei einem entsprechenden Öffnungswinkel hinsichtlich der Detektion durch die Detektionseinrichtung sowohl gleichzeitig eine seitliche als auch eine in Fahrrichtung der Fördereinheit erfolgende Erfassung ermöglichen.

Bei den vorgenannten Ausführungsbeispielen kann es von Vorteil sein, dass der von der Längsachse und der Detektionsrichtung eingeschlossene Winkel parallel zum Untergrund, auf dem sich die Fördereinheiten bewegen, angeordnet ist.

Vorteilhafterweise liegt der von der Detektionseinrichtung erfasste Winkelbereich zwischen ±15° und ±80°. Ein derartiger Winkelbereich ermöglicht den erfindungsgemäßen Effekt mit den genannten Winkeln zwischen der Längsachse der Fördereinheit und der Detektionsrichtung.

Bei einer Ausführungsform kann vorgesehen sein, dass die Detektionseinrichtung auf der Basis eines Dauerstrichradars, eines phasenmodulierten Pulsradars oder/und eines frequenzmodulierten Pulsradars arbeitet.

Vorteilhafterweise kann die Detektionseinrichtung an einem in Richtung der Längsachse gesehenen Ende der Fördereinheit angeordnet sein. Somit kann mittels der Detektionseinrichtung die vor der Fördereinheit liegende Umgebung erfasst werden. Alternativ oder zusätzlich kann die Detektionseinrichtung an einem entlang der Richtung der Längsachse verlaufenden äußeren Gehäuseabschnitt der Fördereinheit angeordnet sein. Dies kann insbesondere bei einer Querfahrt der Fördereinrichtung eine Erfassung der in Richtung der Querfahrrichtung der Fördereinheit liegenden Umgebung ermöglichen.

Eine besonders kostengünstige Ausführungsform ergibt sich, wenn die erste Fördereinheit und die zweite Fördereinheit jeweils genau eine Detektionseinrichtung aufweisen. Bei dieser Ausführungsform besteht somit die Möglichkeit, die vor der Fördereinrichtung in Fahrtrichtung befindliche Umgebung beispielsweise mittels der Detektionseinrichtung der ersten Fördereinheit zu erfassen. Die Detektionseinrichtung der zweiten Fördereinheit kann beispielsweise zusätzliche Informationen zum Abgleichen oder Verbessern der erhaltenen Informationen beisteuern.

Besonders vorteilhaft kann in diesem Zusammenhang sein, wenn die erste Fördereinheit und die zweite Fördereinheit gegensinnig hinsichtlich der Anordnung der Detektionseinrichtung ausgerichtet sind. In diesem Fall besteht die Möglichkeit, dass die Detektionseinrichtung der ersten Fördereinheit in Fahrrichtung der gesamten Fördereinrichtung die vor der Fördereinrichtung liegende Umgebung erfasst, während die Detektionseinrichtung der zweiten Fördereinheit bei einer Umkehr der Fahrrichtung der gesamten Fördereinheit das Erfassen der vor der Fördereinrichtung befindlichen Umgebung übernimmt. Gleichzeitig kann die jeweils andere Detektionseinrichtung die Absicherung des hinter der Fördereinrichtung befindlichen Areals übernehmen.

### KURZE BESCHREIBUNG DER ZEICHNUNGEN

Nachfolgend werden Ausführungsbeispiele der Erfindung anhand der Zeichnungen näher erläutert. In diesen zeigen:
- Figuren 1-4: eine erste Ausführungsform der Erfindung;
- Figuren 5-7: eine zweite Ausführungsform der Erfindung;
- Figur 8: eine dritte Ausführungsform der Erfindung;
- Figuren 9, 10: eine vierte Ausführungsform der Erfindung;
- Figuren 11-13: eine Veranschaulichung eines Anwendungsszenarios der zweiten Ausführungsform der Erfindung; und
- Figur 14: eine weitere Veranschaulichung des Anwendungsszenarios der zweiten Ausführungsform der Erfindung.

### BESCHREIBUNG BEVORZUGTER AUSFÜHRUNGSBEISPIELE

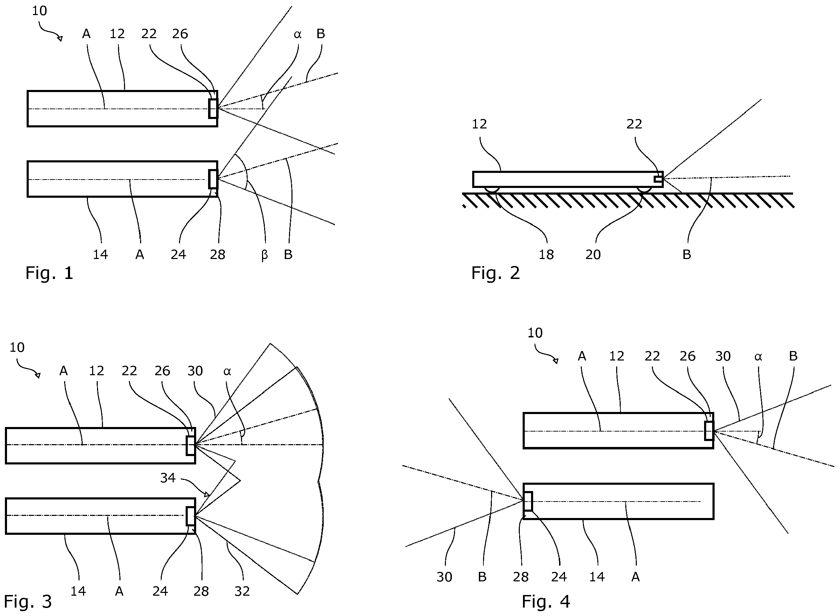

Die Figuren 1-3 zeigen eine erste Ausführungsform einer Fördereinrichtung 10. Figur 1 zeigt eine schematische Draufsicht auf die Fördereinrichtung 10. Die Fördereinrichtung 10 weist eine erste Fördereinheit 12 und eine zweite Fördereinheit 14 auf. Beide Fördereinheiten 12, 14 sind jeweils baugleich und als Förderkufen ausgebildet, so dass beispielsweise beladene oder unbeladene Ladungsträger wie etwa sogenannte Euro-Paletten unterfahren werden können.

Figur 2 zeigt eine schematische Seitenansicht der Fördereinrichtung der Figur 1. Es ist in dieser lediglich die Fördereinheit 12 erkennbar, die Ausführungen zu dieser Fördereinheit gelten jedoch gleichermaßen für die baugleiche Fördereinheit 14. Die Fördereinheit 12 weist zwei Bodenrollen 18, 20 auf, wovon in dieser Ausführungsform nur eine Bodenrolle 18 mittels eines Antriebssystems (nicht abgebildet) antreibbar ist. Es ist jedoch im Rahmen dieser Erfindung auch vorgesehen, beide Bodenrollen 18, 20 antreibbar auszuführen. Mittels der Bodenrollen 18, 20 ist jede Fördereinheit 12, 14 vorrangig entlang seiner Längsachse A verfahrbar. Die Bodenrollen 18, 20 sind so ausgelegt, dass auch Fahrrichtungswechsel möglich sind.

Die Fördereinheiten 12, 14 weisen jeweils eine Detektionseinrichtung 22, 24 auf. Die Detektionseinrichtungen 22, 24 sind radargestützt, d.h. die Erfassung der Umgebung mittels der Detektionseinrichtungen 22, 24 setzt eine elektromagnetische Strahlung im Funkbereich ein, d.h. in einem Frequenzbereich von wenigen MHz bis hin zu mehreren hundert GHz. Die genaue Wahl des Frequenzbereichs hängt von der benötigten Auflösung und der gewünschten Reichweite des Detektionssystems ab. In der vorliegenden Ausführungsform wird eine pulsbasierte Messmethode eingesetzt, bei der Objekte in einer Entfernung von bis zu 50 m und deren Geschwindigkeit erfasst werden können. Das Messverfahren kann die Umgebung beispielsweise mit einer Rate von 30 Hz abtasten. Es setzt das sogenannte Pulskompressionsverfahren ein, um eine hohe Auflösung bei vergleichsweise geringer Sendeleistung zu erreichen.

Die Detektionsrichtung B der Detektionseinrichtungen 22, 24 schließt mit der Längsachse A der Fördereinheiten 12, 14 in der Horizontalen einen Winkel α ein. Der Winkel α beträgt in der gewählten Ausführungsform der Figuren 1 -4 30°. Er kann vorteilhafterweise zwischen 5° und 110° gewählt werden. Die genaue Wahl des Winkels α hängt von mehreren Faktoren ab. Einen Einflussfaktor stellt der Erfassungswinkel β der Detektionseinrichtungen 22, 24 dar. In dem Ausführungsbeispiel der Figuren 1-4 beträgt dieser 75°. Andere Einflussgrößen sind der im Betrieb der Fördereinrichtung 10 vorherrschende Abstand der beiden Fördereinheiten 12, 14 sowie die im Einsatzgebiet der Fördereinrichtung 10 vorliegenden Umgebungsbedingungen.

Der zwischen der Längsachse A der Fördereinheiten 12, 14 und zwischen der Detektionsrichtung B befindliche Winkel α ist im Vergleich zu einer parallelen Anordnung vorteilhaft: Durch die Verkippung der Detektionsrichtung B kann der zwischen den Fördereinheiten 12 und 14 liegende Bereich durch die Detektionseinrichtung, die im Betrieb nach innen gerichtet ist, besser erfasst werden. In dem Ausführungsbeispiel der Figuren 1-3 ist dies die Detektionseinrichtung 24 der Fördereinheit 14. Zwar bedingt dies seitlich der Fördereinheit 14 eine etwas eingeschränkte Erfassung der Umgebung, dieser Nachteil wiegt aber gering, da vorrangig der vor der Fördereinrichtung in Fahr- bzw. Längsrichtung liegende Umgebungsbereich von erhöhter Relevanz ist.

Besonders vorteilhaft ist eine gegensinnige Anordnung der Fördereinheiten 12, 14 hinsichtlich dem Anbringungsort der Detektionseinrichtungen 22, 24. Bei der gegensinnigen Anordnung, wie sie in Figur 4 schematisch dargestellt ist, zeigt eine Detektionseinrichtung 22 in eine Richtung, beispielsweise der momentanen Fahrrichtung, und die andere Detektionseinrichtung 24 zeigt in die entgegengesetzte Richtung. Diese Konfiguration kann man beispielsweise durch eine entsprechende Anordnung der Fördereinheiten 12, 14 erzielen. In dieser Anordnung kann eine Detektionseinrichtung 22 den vor der Fördereinrichtung 10 liegenden Bereich unter verbesserter Erfassung des direkt vor der Fördereinrichtung liegenden Areals abdecken, während die andere Detektionseinrichtung 24 nur bei einer Richtungsumkehr für eine Kollisionsprävention herangezogen wird. Alternativ kann die andere Detektionseinrichtung 24 zusätzlich den hinter der Fördereinrichtung 10 liegenden Bereich überwachen und so für eine zusätzliche Sicherheit sorgen. So kann es beispielsweise vorgesehen sein, dass bereits vor einer geplanten Änderung der Fahrrichtung der Bereich hinter der Fördereinrichtung 10 überwacht wird, so dass eine zeitlich lückenlose Abdeckung des zu befahrenden Bereichs erreicht werden kann.

Figur 3 stellt in einer schematischen Draufsicht den Erfassungsbereich 30 der Detektionseinrichtungen 22, 24 der Fördereinrichtung 10 einem Erfassungsbereich 32 gegenüber, der bei einer parallelen Ausrichtung der Detektionseinrichtungen 22, 24 relativ zu der Längsachse A der Fördereinheiten entstehen würde. Deutlich erkennbar erstreckt sich der Erfassungsbereich 30 in einem Bereich 34 zwischen den Fördereinheiten 12, 14 näher an den Enden 26, 28 der Fördereinheiten 12, 14, an denen die Detektionseinrichtungen 22, 24 angeordnet sind, so dass in diesem Nahbereich eine deutlich bessere Erfassung erfolgen kann.

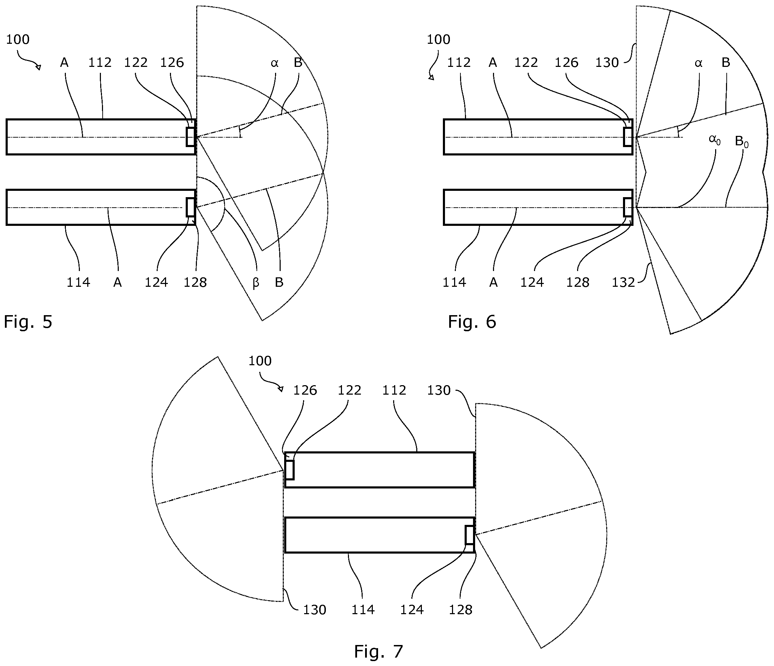

In den Figuren 5-7 ist eine weitere Ausführungsform einer Fördereinrichtung 100 dargestellt. Alle gleichen oder vergleichbaren Merkmale sind durch Bezugszeichen referenziert, zu denen 100 addiert worden ist. Solche Merkmale werden zur Vermeidung von Wiederholungen nicht erneut beschrieben.

Im Unterschied zu der Ausführungsform der Fördereinrichtung 10, wie sie in den Figuren 1-4 dargestellt ist, beträgt bei der in den Figuren 5-7 dargestellten Fördereinrichtung 100 der Erfassungswinkel β=150°. Dies ist in Figur 5 anschaulich in einer schematischen Draufsicht dargestellt. Mit einem Winkel α=30° zwischen der Längsachse A der Fördereinheiten 112, 114 und der Detektionsrichtung B ergibt sich so eine vollständige Erfassung des Bereichs direkt vor der Fördereinrichtung 100.

Figur 6 zeigt einen Vergleich der Erfassungsbereiche 130, 132 mit einem Winkel von α=30° und α₀=0° zwischen der Längsachse A der jeweiligen Fördereinheit 112, 114 und der Erfassungsrichtung B bzw. B₀. Diese Gegenüberstellung zeigt deutlich die verbesserte Erfassung des Bereichs direkt vor der Fördereinrichtung 100.

Bei der in Figur 7 gezeigten gegensinnigen Anordnung der Fördereinheiten 112, 114 ergibt sich wie bereits zu Figur 3 erläutert eine gleichzeitige Erfassung der Umgebung vor und hinter der Fördereinrichtung 100.

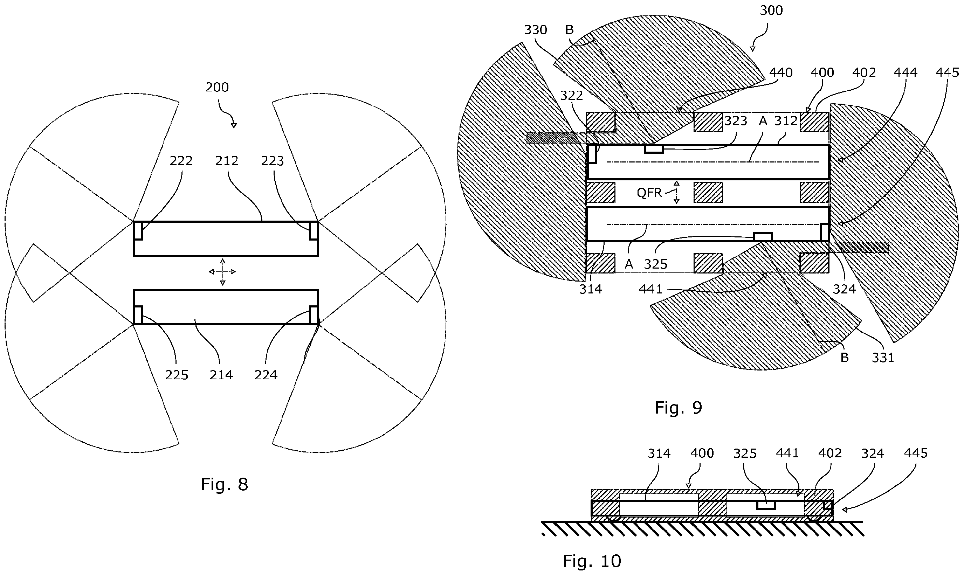

Figur 8 zeigt eine weitere Ausführungsform einer Fördereinrichtung 200. Auch hier wurden alle gleichen oder vergleichbaren Merkmale durch Bezugszeichen referenziert, zu denen 100 bzw. 200 addiert worden ist. Solche Merkmale werden zur Vermeidung von Wiederholungen nicht erneut beschrieben.

Die Fördereinheiten 212, 214 weisen im Unterschied zu den vorhergehenden Ausführungsformen zwei Detektionseinrichtungen auf: Die erste Fördereinheit 212 ist mit zwei Detektionseinrichtungen 222, 223 ausgestattet, die zweite Fördereinheit 214 mit zwei Detektionseinrichtungen 224, 225. Zusammen mit den vergleichbar mit der Ausführungsform der Figuren 5-7 gewählten Erfassungswinkeln β von 150° und einem Winkel α von 30° zwischen der Längsachse A der Fördereinheiten 212, 214 und der Erfassungsrichtung B ist es möglich, bei der in Figur 8 gezeigten gegensinnigen Anordnung der Fördereinheiten 212, 214 zum einen eine je nach Anwendung ausreichend gute Abdeckung des Bereichs vor der Fördereinrichtung 200 zu erreichen.

In den Figuren 9 und 10 ist eine vierte Ausführungsform der Erfindung einer Fördereinrichtung 300 dargestellt. Figur 9 zeigt eine schematische, teilweise geschnittene Draufsicht, Figur 10 eine schematische, teilweise geschnittene seitliche Ansicht. Auch hier wurden alle gleichen oder vergleichbaren Merkmale durch Bezugszeichen referenziert, zu denen 100, 200 oder 300 addiert worden ist. Solche Merkmale werden zur Vermeidung von Wiederholungen nicht erneut beschrieben.

Die Fördereinrichtung 300 umfasst zwei Fördereinheiten 312, 314, die jeweils zwei Detektionseinrichtungen 322, 323 bzw. 324, 325 aufweisen. Im Unterschied zu der Ausführungsform 200 der Figur 7 ist jeweils eine Detektionseinrichtung 323, 325 an einer Seitenwand angeordnet, die sich in Richtung der Längsachsen A der Fördereinheiten 312, 314 erstreckt. Alle Detektionseinrichtungen 322-325 weisen einen gleichen Erfassungswinkel auf, der vorliegend mit 150° gewählt wurde. Selbstverständlich sind auch andere Erfassungswinkel und/oder Kombinationen möglich, wie beispielsweise unterschiedliche Erfassungswinkel für die endständige Detektionseinheit 322, 324 und für die seitlich angeordneten Detektionseinrichtung 323, 325.

In den Figuren 9 und 10 ist die Fördereinrichtung unter einer Europalette 400 gezeigt. Die Europalette 400 weist Freiräume 444, 445 an den äußeren Längsseiten auf, in welche die Fördereinheiten 312, 314 eingefahren sind und somit die Europalette 400 anheben können. Die Freiräume 444, 445 werden unter anderem durch die Anordnung von Stützelementen 402 definiert, die in den Figuren 9 und 10 in einer Schnittansicht dargestellt sind. Für eine bessere Darstellbarkeit wurde in den Figuren 9 und 10 jeweils nur eines der Stützelemente 402 mit einem Bezugszeichen versehen. Wie in den Figuren 9 und 10 gut ersichtlich ist, sind die seitlichen Detektionseinrichtungen 323, 325 so angeordnet, dass sie aus seitlichen Freiräumen 440, 442 die entsprechende Umgebung erfassen können. Dabei ergeben sich teilweise durch die Stützelemente 402 verschattete Erfassungsfelder 330, 331, die aber trotz der Verschattung einen wesentlichen Bereich seitliche der Fördereinrichtung 300 erfassen können. Insbesondere bietet auch hier die nicht parallele Anordnung von Erfassungsrichtung B und Querförderrichtung QFR die Möglichkeit, zumindest teilweise das Erfassungsfeld 330, 331 entlang der jeweiligen Fördereinheit 312, 314 zu erstrecken und so beispielsweise bei der Navigation der Fördereinrichtung 300 unterhalb des Ladungsträgers, hier der Europalette 400, relevante Informationen zu generieren.

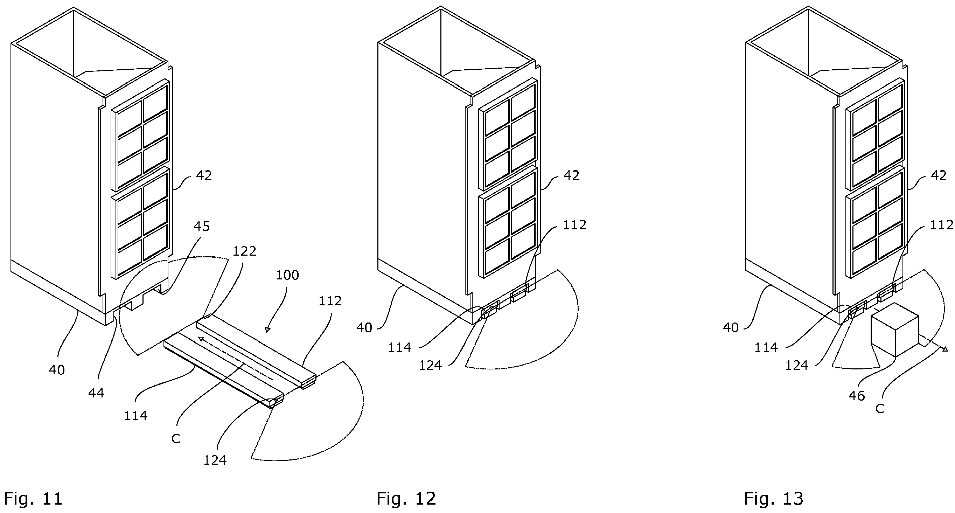

In den Figuren 11-14 ist zum besseren Verständnis der Erfindung ein Anwendungsszenario für die Fördereinrichtung 100 dargestellt. Figur 11 zeigt die Fördereinrichtung 100 bei der Annäherung an einen Ladungsträger 40. Der Ladungsträger 40 ist in diesem Beispiel fest mit einem zu befördernden Gut 42, hier eine Filtereinheit für eine Lackierkabine, verbunden. Alternativ könnte das Gut 42 auch lose auf dem Ladungsträger aufliegen oder anderweitig mit diesem verbunden sein. Mittels der Detektionseinrichtung 122 ist es der Fördereinrichtung 100 möglich, den Abstand und die Größe des zu unterfahrenden Ladungsträgers 40 festzustellen. Insbesondere können die für das Einfahren vorgesehenen Freiräume 44, 45 erkannt, geeignete Einfahrparameter für eine Bewegung der Fördereinheiten 112, 114 berechnet und entsprechend der Erkennungsgenauigkeit der Detektionseinrichtung 122 angefahren werden. Für diesen Zweck ist die eine Detektionseinrichtung 122 der ersten Fördereinheit 112 ausreichend, wenn wie in diesem Ausführungsbeispiel eine signaltechnische Kopplung der beiden Fördereinheiten 112, 114 realisiert ist. Dies bedeutet, dass die beiden Fördereinheiten 112, 114 direkt oder indirekt - beispielsweise über eine Zentrale - miteinander kommunizieren und so eine gemeinsame, miteinander abgestimmte Bewegung der Fördereinheiten 112, 114 als Fördereinrichtung 100 möglich ist.

Figur 12 zeigt den Zustand, in dem sich die Fördereinrichtung 100 vollständig unterhalb des Ladungsträgers 40 befindet und der Ladungsträger 40 angehoben ist.. Aufgrund der Verkippung der Detektionsrichtung B gegenüber der Längsachse A der Fördereinheit 114 erfasst die Detektionseinrichtung 124 einen Bereich, der senkrecht zur Längsachse A verläuft und kann beispielsweise das vollständige Eintauchen der Fördereinheit 114 in das Freiraum 44 detektieren und der Steuerung der Fördereinrichtung 100 ein Signal zum Stillstand der Fördereinrichtung 100 übermitteln.

In Figur 13 ist eine Situation gezeigt, in der die bereits unter den Ladungsträger 40 eingefahrene Fördereinrichtung 100 zusammen mit dem angehobenen Ladungsträger 40 sich fortbewegen möchte. Die geplante Fahrrichtung, in Figur 13 mit einem Pfeil C gekennzeichnet, ist allerdings durch ein Objekt 46 für die gesamte Fördereinrichtung 100 blockiert. Die Detektionseinrichtung 124 der Fördereinheit 114 ist jedoch in der Lage, das Objekt 46 als Hindernis zu erkennen, auch wenn es sich nicht direkt vor dem Ladungsträger 40 befände, um gefährliche Situationen wie beispielsweise Quetschstellen zu vermeiden. Durch die erwähnte signaltechnische Kopplung der beiden Fördereinheiten 112, 114 ist die Erkennung von Objekten und/oder Hindernissen durch eine Detektionseinrichtung 122, 124 einer Fördereinheit 112, 114 ausreichend, um die gesamte Fördereinrichtung 100 mit entsprechenden Detektionssignalen für eine Steuerung zu versorgen. Bei einer Einzelfahrt der Fördereinheiten 112, 114 kann eine solche Kopplung entfallen.

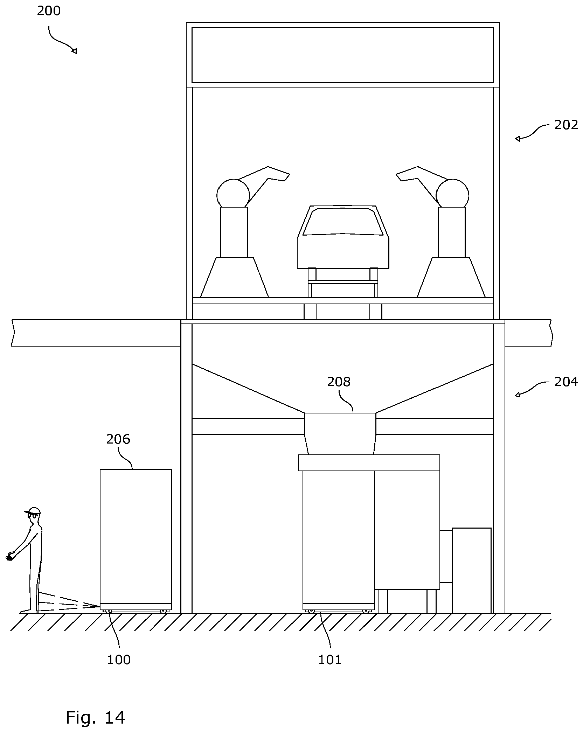

Figur 14 zeigt zwei Anwendungsfälle einer solchen Fördereinrichtung 100. Es ist eine Lackieranlage 200 dargestellt, deren genauer Aufbau für das Verständnis nicht weitere relevant ist und deshalb nur grob skizziert wird. Der in einer Lackierkabine 202 anfallende Overspray wird über geeignete Absaugeinrichtungen und -leitungen einem Filtersystem 204 zugeleitet. Das Filtersystem 204 weist einzelne Filtereinheiten 206, 208 auf.

Eine erste Filtereinheit 206, welche hinsichtlich ihrer Filterkapazität erschöpft ist, wird von einer Fördereinrichtung 100 angehoben und wird von dem Filtersystem 204 abtransportiert. Bei diesem Vorgang ermöglicht bei einer gegensinnigen Anordnung der Fördereinheiten 112, 114 die in Fahrrichtung weisende Detektionseinrichtung eine Kollisions- und/oder Hinderniserkennung für die Fördereinrichtung 100. Allgemein sorgt die nicht parallele Anordnung von Detektionsrichtung B und Längsachse A für eine Detektion von Hindernissen, die auch direkt vor und zwischen den Fördereinheiten 112, 114 liegen.

Eine zweite Filtereinheit 208 wird gerade von einer Fördereinrichtung 101 angeliefert, um die entnommene Filtereinheit 208 zu ersetzen. Hier kann mittels der Detektionseinrichtungen der Fördereinheiten navigiert werden, gegebenenfalls unterstützt durch ein an den Fördereinheiten angebrachtes Kamerasystem.

## Patentansprüche

1. Fördereinrichtung (10) zum Fördern von beladenen oder unbeladenen Ladungsträgern (40), mit
einer ersten Fördereinheit (12) und einer zweiten Fördereinheit (14), wobei jede Fördereinheit eine Längsachse (A) aufweist und auf Bodenrollen (18, 20) verfahrbar ist,
wobei zumindest eine der Bodenrollen (18) einer Fördereinheit (12, 14) mittels eines Antriebssystems antreibbar ist,
wobei die erste Fördereinheit (12) und die zweite Fördereinheit (14) relativ zueinander und voneinander unabhängig entlang einer jeweiligen Fahrrichtung zumindest in Richtung der Längsachse (A) bewegbar sind, und wobei die erste Fördereinheit (12) und die zweite Fördereinheit (14) für das gemeinsame Fördern eines einzelnen Ladungsträgers (40) konzipiert sind,
**dadurch gekennzeichnet, dass**
die erste Fördereinheit (12) und die zweite Fördereinheit (14)jeweils eine radargestützte Detektionseinrichtung (22, 24) aufweisen, die in der direkten räumlichen Umgebung der jeweiligen Fördereinheit (12, 14) einen Raumwinkelbereich entlang einer Detektionsrichtung (B) erfasst und
die Längsachse (A) einer Fördereinheit (12, 14) und die Detektionsrichtung (22, 24) einen Winkel (α) ≥ 5° einschließen.

2. Fördereinrichtung nach Anspruch 1, wobei der Winkel (α) zwischen der Längsachse (A) und der Detektionsrichtung (B) zwischen 5° und 110° liegt, besonders bevorzugt zwischen 10° und 50° oder zwischen 80° und 100°, besonders bevorzugt zwischen 20° und 40° und insbesondere bei 30° oder 90° liegt.

3. Fördereinrichtung nach einem der Ansprüche 1 oder 2, wobei der von der Längsachse (A) und der Detektionsrichtung (B) eingeschlossene Winkel parallel zum Untergrund, auf dem sich die Fördereinheiten (12, 14) bewegen, angeordnet ist.

4. Fördereinrichtung nach einem der vorhergehenden Ansprüche, wobei der von der Detektionseinrichtung (22, 24) erfasste Winkelbereich (β) zwischen ±15° und ±80° liegt.

5. Fördereinrichtung nach einem der vorhergehenden Ansprüche, wobei die Detektionseinrichtung (22, 24) auf der Basis eines Dauerstrichradars, eines phasenmodulierten Pulsradars oder/und eines frequenzmodulierten Pulsradars arbeitet.

6. Fördereinrichtung nach einem der vorhergehenden Ansprüche, wobei die Detektionseinrichtung an einem in Richtung der Längsachse (A) gesehenen Ende (26, 28) der Fördereinheit (22, 24) angeordnet ist.

7. Fördereinrichtung nach einem der vorhergehenden Ansprüche 1-5, wobei die Detektionseinrichtung (323, 325) an einer Seitenwand der Fördereinheit (312, 314) angeordnet ist, die sich zumindest teilweise parallel zu der Längsaches (A) der Fördereinheit (312, 314) erstreckt.

8. Fördereinrichtung nach einem der vorhergehenden Ansprüche, wobei die erste Fördereinheit (22) und die zweite Fördereinheit (24) jeweils genau eine Detektionseinrichtung (22, 24) aufweisen.

9. Fördereinrichtung nach Anspruch 8, wobei die erste Fördereinheit (12) und die zweite Fördereinheit (14) gegensinnig hinsichtlich der Anordnung der Detektionseinrichtung (22, 24) ausgerichtet sind.

## Claims

1. Conveying device (10) for conveying laden or unladen load carriers (40), having
a first conveying unit (12) and a second conveying (14), wherein each conveying unit has a longitudinal axis (A) and can be moved on floor rollers (18, 20),
wherein at least one of the floor rollers (18) of a conveying unit (12, 14) can be driven by means of a drive system,
wherein the first conveying unit (12) and the second conveying unit (14) can be moved relative to one another and independently of one another along a respective direction of travel at least in the direction of the longitudinal axis (A), and
wherein the first conveying unit (12) and the second conveying unit (14) are designed for common conveying of an individual load carrier (40),
**characterized in that**
the first conveying unit (12) and the second conveying unit (14) each have a radar-supported detection device (22, 24) which senses a spatial angular range along a detection direction (B) in the direct spatial surroundings of the respective conveying unit (12, 14), and
the longitudinal axis (A) of a conveying unit (12, 14) and the detection direction (22, 24) enclose an angle (α) ≥ 5°.

2. Conveying unit according to Claim 1, wherein the angle (α) between the longitudinal axis (A) and the detection direction (B) is between 5° and 110°, particularly preferably 10° and 50° or between 80° and 100°, particularly preferably between 20° and 40°, and in particular is 30° or 90°.

3. Conveying unit according to one of Claims 1 or 2, wherein the angle which is enclosed by the longitudinal axis (A) and the detection direction (B) is arranged parallel to the underlying surface on which the conveying units (12, 14) move.

4. Conveying unit according to one of the preceding claims, wherein the angular range (β) which is sensed by the detection device (22, 24) is between ±15° and ±80°.

5. Conveying device according to one of the preceding claims, wherein the detection device (22, 24) operates on the basis of a continuous-wave radar, a phase-modulated pulse radar and/or a frequency-modulated pulse radar.

6. Conveying device according to one of the preceding claims, wherein the detection device is arranged at one end (26, 28) of the conveying unit (22, 24) when viewed in the direction of the longitudinal axis (A).

7. Conveying device according to one of the preceding Claims 1-5, wherein the detection device (323, 325) is arranged on a side wall of the conveying unit (312, 314) which extends at least partially parallel to the longitudinal axis (A) of the conveying unit (312, 314).

8. Conveying device according to one of the preceding claims, wherein the first conveying unit (22) and the second conveying unit (24) each have precisely one detection device (22, 24).

9. Conveying device according to Claim 8, wherein the first conveying unit (12) and the second conveying unit (14) are oriented in opposite directions with respect to the arrangement of the detection device (22, 24).

## Revendications

1. Dispositif de convoyage (10) pour convoyer des supports de charges (40) garnis ou non garnis, comprenant
une première unité de convoyage (12) et une seconde unité de convoyage (14), chaque unité de convoyage présentant un axe longitudinal (A) et pouvant être déplacée sur des roulettes inférieures (18, 20),
au moins l'une (18) des roulettes inférieures d'une unité de convoyage (12, 14) pouvant être entraînée au moyen d'un système d'entraînement,
la première unité de convoyage (12) et la seconde unité de convoyage (14) étant mobiles l'une par rapport à l'autre et indépendamment l'une de l'autre, le long d'une direction de déplacement respective, au moins dans la direction dudit axe longitudinal (A), et
ladite première unité de convoyage (12) et ladite seconde unité de convoyage (14) étant réalisées pour le convoyage commun d'un support de charge (40) individuel,
**caractérisé par le fait que**
la première unité de convoyage (12) et la seconde unité de convoyage (14) sont respectivement équipées d'un dispositif de détection (22, 24) à assistance radar qui saisit une plage d'angles solides, le long d'une direction de détection (B), dans l'environnement spatial direct de l'unité de convoyage (12, 14) considérée, et
l'axe longitudinal (A) d'une unité de convoyage (12, 14), et ledit dispositif de détection (22, 24), décrivent un angle (α) ≥ 5°.

2. Dispositif de convoyage selon la revendication 1, dans lequel l'angle (α), entre l'axe longitudinal (A) et la direction de détection (B), se situe entre 5° et 110°, entre 10° et 50° avec préférence particulière, ou bien entre 80° et 100°, entre 20° et 40° avec préférence particulière, et est notamment de l'ordre de 30° ou 90°.

3. Dispositif de convoyage selon l'une des revendications 1 ou 2, dans lequel l'angle, décrit par l'axe longitudinal (A) et la direction de détection (B), est parallèle à la structure sous-jacente sur laquelle les unités de convoyage (12, 14) se meuvent.

4. Dispositif de convoyage selon l'une des revendications précédentes, dans lequel la plage angulaire (β), saisie par le dispositif de détection (22, 24), se situe entre ± 15° et ±80°.

5. Dispositif de convoyage selon l'une des revendications précédentes, dans lequel le dispositif de détection (22, 24) fonctionne sur la base d'un radar à ondes continues, d'un radar pulsé à modulation de phase, et/ou d'un radar pulsé à modulation de fréquence.

6. Dispositif de convoyage selon l'une des revendications précédentes, dans lequel le dispositif de détection est placé à une extrémité (26, 28) de l'unité de convoyage (12, 14) considérée dans la direction de l'axe longitudinal (A).

7. Dispositif de convoyage selon l'une des revendications 1 à 5 précédentes, dans lequel le dispositif de détection (323, 325) est implanté sur une paroi latérale de l'unité de convoyage (312, 314) qui s'étend, au moins en partie, parallèlement à l'axe longitudinal (A) de ladite unité de convoyage (312, 314).

8. Dispositif de convoyage selon l'une des revendications précédentes, dans lequel la première unité de convoyage (12) et la seconde unité de convoyage (14) sont équipées, à chaque fois, d'exactement un dispositif de détection (22, 24).

9. Dispositif de convoyage selon la revendication 8, dans lequel la première unité de convoyage (12) et la seconde unité de convoyage (14) sont orientées dans des sens opposés par rapport à l'emplacement du dispositif de détection (22, 24).
